# EUROPEAN PATENT SPECIFICATION

(11) **EP 4 416 041 B1**
(45) Date of publication and mention of the grant of the patent: **05.11.2025**
(21) Application number: 22778073.1
(22) Date of filing: 15.09.2022
(51) Int. Cl.: B62K 19/42, B62J 6/26, B62H 1/04, B62H 1/02

(54) **KICKSTAND FOR BICYCLES**
STÄNDER FÜR FAHRRÄDER
BÉQUILLE POUR BICYCLETTES

(30) Priority: 13.10.2021 IT 202100026276
(43) Date of publication of application: 21.08.2024
(73) Proprietor: IP Capital Fund S.C.A., 2240 Luxembourg (LU)
(72) Inventor: LETTIERI, Fabio, 2240 Luxembourg (LU)
(74) Representative: Grana, Daniele
(86) International application number: PCT/IB2022/058715
(87) International publication number: WO 2023/062458

(56) References cited:
- CN-A- 101 028 843
- CN-A- 105 292 321
- CN-A- 105 329 339
- CN-A- 111 301 567
- CN-U- 205 239 706
- DE-U1- 202020 000 379
- FR-A1- 3 103 756
- JP-A- 2006 327 221
- KR-A- 20170 011 851

## Description

### Technical Field

The present invention relates to a kickstand for bicycles.

### Background Art

It is well known that nowadays more and more cyclists are involved in road accidents.

This fact is mainly attributable to an ever-increasing amount of motor vehicles on the road, which, especially in large cities, poses serious risks towards the safety of those riding bicycles.

In this regard, in fact, it should be noted that distraction of motor vehicle drivers is statistically the leading cause of traffic accidents.

The situation is even more dangerous in low visibility conditions, in which bicycles can be difficult to identify even to an attentive driver.

For example, such conditions are encountered at night, in foggy weather, and during particularly intense showers such that the visibility of motor vehicle drivers is greatly restricted.

No wonder, then, that there is an increasing need for cyclists to signal their presence.

In this regard, in fact, it is worth noting that cyclist signaling devices on the market, such as, e.g., headlights and reflectors, often prove insufficient in signaling the presence of the bicycle to one or more motor vehicles that are circulating in its proximity.

Document DE 20 2020 000 379 U1, which is considered being the closest prior art, discloses a two-wheeled vehicle, for example a bicycle or e-scooter, including a lighting system and a side stand, characterized in that it is equipped with a device that switches off the lighting when the side stand is moved to the working position.

Document KR 2017 0011851 A discloses a kick stand pump capable of combining a kick stand with a pump while preventing robbery.

Document JP 2006 327221 A discloses a bicycle equipped with a pair of legs installed rigidly on a frame holding the front wheel and a light emitting device mounted on each leg.

### Description of the Invention

The main aim of the present invention is to devise a kickstand for bicycles that can effectively signal the presence of a bicycle to those in its proximity, especially drivers of motor vehicles.

As part of this aim, the present invention aims to devise a kickstand for bicycles that can effectively signal the presence of a cyclist even in low-visibility situations such as, e.g., at night.

Another object of the present invention is to devise a kickstand for bicycles that can overcome the aforementioned drawbacks of the prior art within the framework of a simple, rational, easy-to-use and cost-effective solution.

The aforementioned objects are achieved by this kickstand for bicycles having the characteristics of claim 1.

### Brief Description of the Drawings

Other characteristics and advantages of the present invention will become more apparent from the description of a preferred, but not exclusive, embodiment of a kickstand for bicycles, illustrated by way of an indicative, yet non-limiting example in the attached tables of drawings in which:

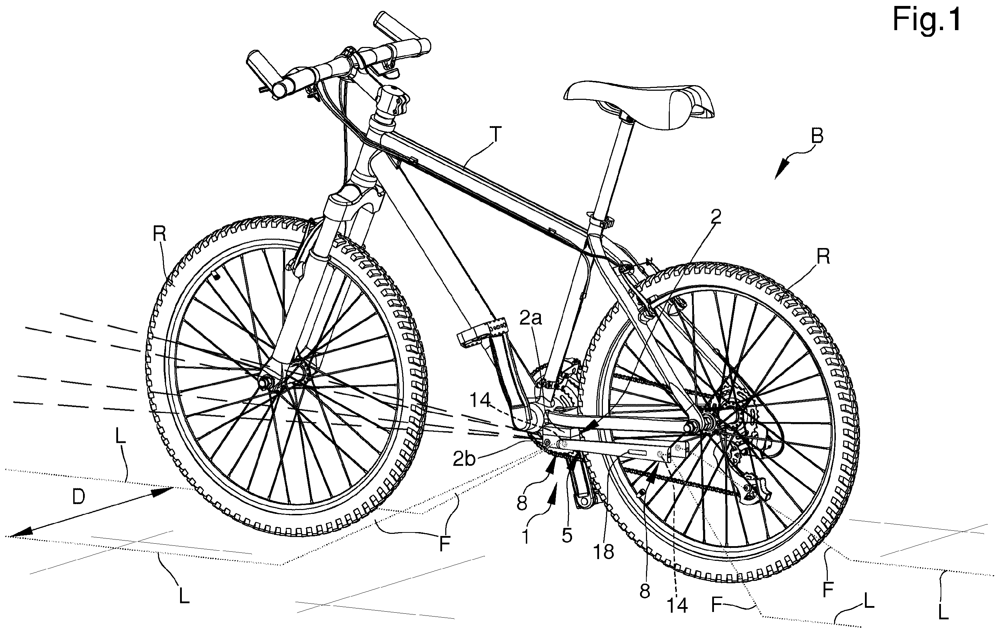

Figure 1 is an axonometric overall view of a bicycle provided with the kickstand according to the invention;

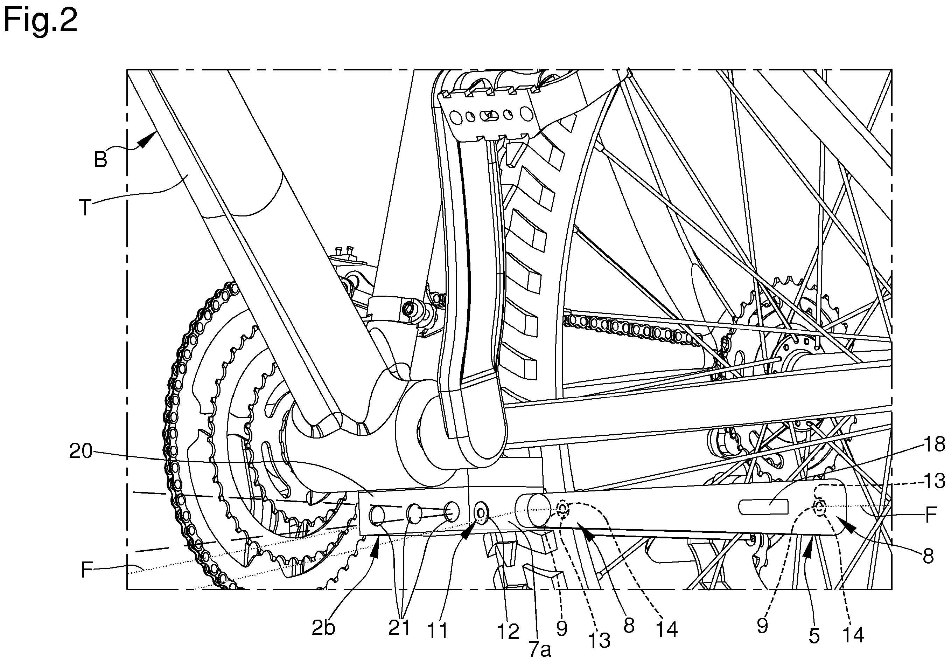

Figure 2 is a detailed view of the kickstand according to the invention with the legs positioned in the raised riding position;
Figure 3 is a detailed view of the kickstand according to the invention with the legs positioned in the lowered parking position;
Figure 4 shows in detail the base body of the kickstand according to the invention;
Figure 5 is a schematic view of the electronic management and control unit.

### Embodiments of the Invention

With particular reference to these figures, reference numeral 1 globally indicates a kickstand for bicycles.

The kickstand for bicycles 1 comprises at least one base body 2 associated with a frame T of a bicycle B.

Specifically, the base body 2 comprises at least a first base element 2a attachable to the frame T of a bicycle B.

In this regard, the first base element 2a is substantially shaped as a parallelepiped.

Again, the first base element 2a is made at least partly of plastic material.

For example, the first base element 2a is made at least partly of polypropylene (PP) and/or polyethylene (PE) and/or polyvinyl chloride (PVC) and/or other plastic materials still known to the expert in the field.

Conveniently, the first base element 2a is associated with fastening means 3 of the base body 2 to the frame T.

According to a preferred embodiment, the fastening means 3 are attached to the frame T at the junction point of the horizontal chainstays (so-called "low chainstays") of the bicycle B.

In this case, the fastening means 3 comprise at least one threaded fastening element 4.

Preferably, the fastening element 4 is of the type of a bolt.

For example, the fastening element 4 comprises at least one plastic nut 4.

Fastening means 3 of different types cannot however be ruled out allowing the base body 2 to be attached to the frame T efficiently.

It is emphasized that the special expedient of providing fastening means 3 to the frame T allows the kickstand 1 to be installed on a bicycle B in an immediate, simple and intuitive manner.

It should also be emphasized that the special expedient of providing a fastening element 4 comprising at least one plastic nut 4 makes it possible to secure the base body 2 to the frame T in a particularly firm and strong manner, counteracting, for example, attempts to steal the kickstand 1 and its tampering and/or damage by malicious persons.

The kickstand 1 then comprises at least one leg 5, 6 which can rest on the ground to support the weight of the bicycle B.

Specifically, the leg 5, 6 is associated in a revolving manner with the base body 2 and is positionable in at least one lowered parking position and in at least one raised riding position.

In detail, the leg 5, 6 is pivoted to the base body 2.

Again, the leg 5, 6 is conformed in an elongated manner.

In other words, the leg 5, 6 has a similar conformation to the legs 5, 6 known to the technician in the field.

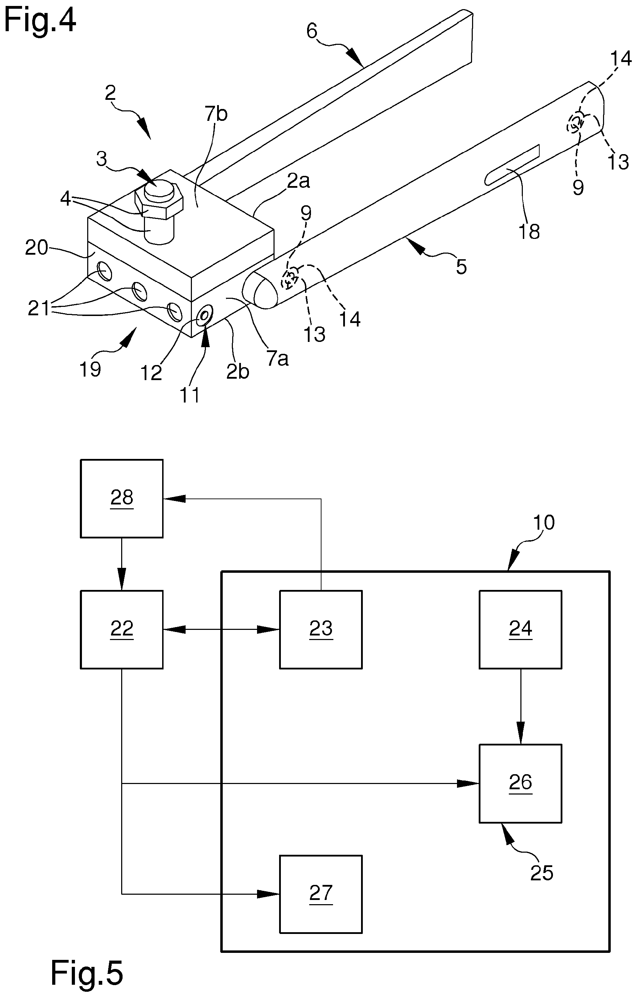

As visible in Figure 4, the base body 2 comprises at least a second base element 2b associated with the first base element 2a in a removable manner.

In the present case, the second base element 2b is mechanically interlocked with the first base element 2a.

A differently conformed base body 2 cannot however be ruled out.

Specifically, a base body 2 made as a single body piece cannot be ruled out.

In other words, a base body 2 in which the first base element 2a and the second base element 2b are not distinct and separable bodies from each other but go together to define a monolithic base body 2 cannot be ruled out.

In particular, the leg 5, 6 is associated in a rotatable manner with the second base element 2b.

More specifically, the second base element 2b comprises at least two side surfaces 7a, the leg 5, 6 being associated with one of the two side surfaces 7a in a rotatable manner.

In other words, the leg 5, 6 is pivoted to one of the two side surfaces 7a.

The second base element 2b then comprises at least one upper surface 7b with which the first base element 2a is associated.

In this regard, the second base element 2b is substantially shaped as a parallelepiped.

In this case, the second base element 2b is shaped quite similarly to the first base element 2a.

Similarly to the first base element 2a, the second base element 2b is made at least partly of plastic material.

For example, the second base element 2b is made at least partly of polypropylene (PP) and/or polyethylene (PE) and/or polyvinyl chloride (PVC) and/or other plastic materials still known to the expert in the field.

The kickstand 1 comprises signaling means 8 adapted to signal the presence of the bicycle B comprising at least one signaling device 9 associated with the leg 5, 6 and configured to emit at least one light beam F.

Specifically, the at least one signaling device 9 is oriented so as to project the light beam F on the ground to define a light line L alongside the bicycle B when the leg 5, 6 is in the raised riding position.

In particular, the light beam F is of the type of a laser beam.

In other words, the signaling device 9 is of the type of a laser diode.

According to the preferred embodiment, the light beam F is of the type of a red laser beam.

The special expedient of providing a light beam F of the type of a laser beam, therefore, allows the presence of the bicycle B to be signaled even in low-visibility situations such as, e.g., at night.

According to the invention, the kickstand 1 comprises at least one electronic management and control unit 10 associated with the base body 2 and operatively connected to the signaling means 8.

In detail, the electronic management and control unit 10 is configured to detect whether the leg 5, 6 is in the raised riding position and to activate, as a result of the detection, the signaling means 8.

In particular, the electronic management and control unit 10 is associated with the second base element 2b.

Conveniently, the kickstand 1 comprises power supply means 11 of the signaling means 8 associated with the base body 2.

Specifically, the power supply means 11 are associated with the second base element 2b.

In particular, the power supply means 11 comprise at least one electrical energy storage device.

In the present case, the storage device is of the type of a rechargeable battery.

For example, the storage device is of the type of a rechargeable lithium battery.

In the present case, the storage device is arranged at least partly within the second base element 2b.

It cannot, however, be ruled out that the storage device is of the type of a rechargeable battery extractable from the second base element 2b.

This means that, in this case, the storage device can be conveniently loaded by means of an external electric charging device and/or by means of direct connection to the power grid.

Conveniently, the power supply means 11 comprise at least one connection port 12 for the electric charge of the storage device.

For example, the connection port 12 is of the type of a USB port.

In other words, the connection port 12 is conformed so that it is associable with a related cable provided with an end USB of the male type.

Different types of connection ports 12 to carry out the electric charge of the storage device cannot however be ruled out.

For example, the connection port 12 can be shaped so as to be associated with an "Italian-style" C7 power cable or with other types of cables still.

In this case, the connection port 12 is cut out on one of the two side surfaces 7a. Conveniently, the signaling means 8 comprise a plurality of signaling devices 9 associated with the leg 5, 6.

According to the preferred embodiment, the signaling means 8 comprise two signaling devices 9 associated with the leg 5, 6.

In the present case, one of the signaling devices 9 is oriented so as to emit the light beam F to define a first stretch of the light line L and the other of the signaling devices 9 is oriented so as to emit the light beam F to define a second stretch of the light line L substantially aligned with the first stretch.

In other words, the first stretch and the second stretch are substantially juxtaposed and collectively define the light line L.

A different number of signaling devices 9 associated with the leg 5, 6 cannot however be ruled out.

For example, the signaling means 8 comprising four signaling devices 9 associated with the leg 5, 6 cannot however be ruled out, each emitting the light beam F to define a first, a second, a third and a fourth stretch of the light line L, respectively.

Preferably, the leg 5, 6 is at least partly hollow to define inside it at least one housing 13 and is provided with at least one hole 14 obtained through and communicating with the housing 13.

Specifically, the signaling device 9 is housed at least partly inside the housing 13 and is arranged at the point where the hole 14 is located.

In detail, the signaling device 9 is arranged so as to emit the light beam F and have it pass through the hole 14.

According to the invention, the kickstand 1 comprises at least one first leg 5 and at least one second leg 6 mutually locked together in rotation around the base body 2.

Specifically, the first leg 5 and the second leg 6 are each pivoted on a respective side surface 7a.

In detail, the first and the second legs 5, 6 are arranged substantially parallel to at least one reference distance D.

To be precise, the reference distance D is greater than the width of the bicycle B.

This allows the light beam F to be projected onto the ground in a suitable and effective manner without the beam being deflected by hitting a wheel R of the bicycle, for example.

Specifically, at the reference distance D, the signaling devices 9 associated with the first leg 5 define a first light line L on one side of the bicycle B and the signaling devices 9 associated with the second leg 6 define a second light line L on the opposite side of the bicycle B.

In other words, the first light line L and the second light line L define a lane within which the bicycle B is placed.

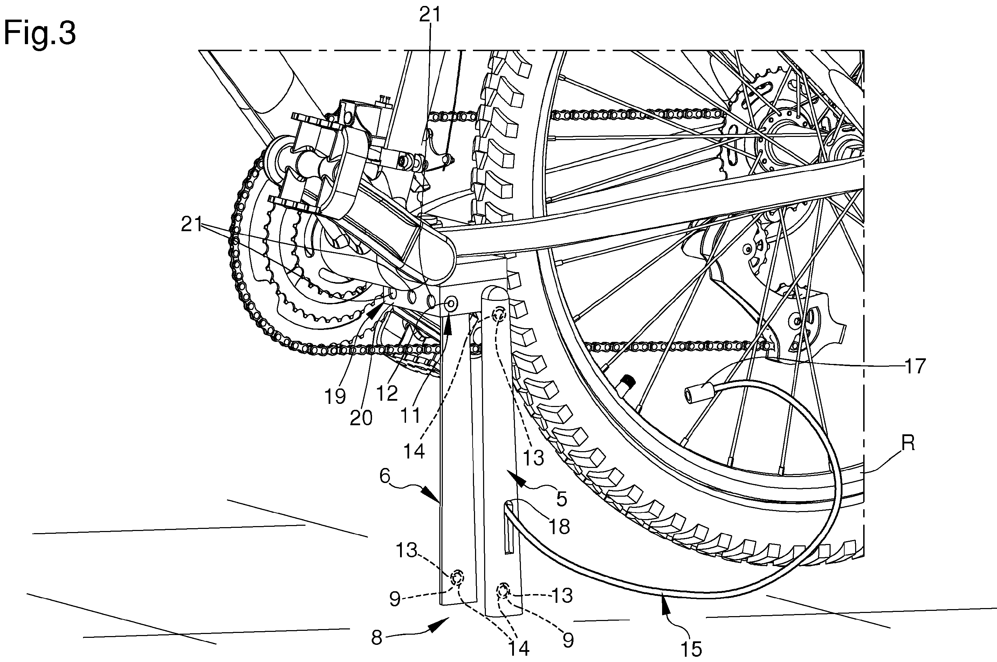

As visible in Figure 3, the kickstand 1 comprises at least one inflation system 15 adapted to inflate at least one wheel R of the bicycle B, the inflation system 15 being associated with the leg 5, 6 and comprising at least one inflation body 15 fitted at least partly inside the housing 13.

In the preferred embodiment, the inflation system 15 is associated with the first leg 5 and with the second leg 6.

In this case, the inflation system 15 comprises a plurality of inflation bodies 15. In particular, the inflation body 15 is shaped in a tubular manner.

In detail, the inflation body 15 is provided with at least one fixed end, not shown in the figures, attached to the housing 13.

Specifically, the inflation system 15 comprises two inflation bodies 15, one of the two inflation bodies 15 being fitted at least partly within a housing 13 and the other of the two inflation bodies 15 being fitted at least partly within the other housing 13.

In addition, the inflation body 15 is provided with at least one movable end 17 coupleable to a wheel R of the bicycle B for the inflation of the latter.

Specifically, the movable end 17 is coupleable to a valve of a wheel R of the bicycle B.

For example, the movable end 17 is coupleable to a valve of the Presta, Regina or Schrader type.

Optionally, the two inflation bodies 15 are provided with movable ends 17 different from each other and coupleable, in particular, with valves of different type.

For example, one of the two inflation bodies 15 may be provided with a movable end 17 coupleable with a valve of the Presta type and the other one of the two inflation bodies 15 may be provided with a movable end 17 coupleable with a valve of the Schrader type.

The possibility cannot however be ruled out of providing two inflation bodies 15 provided with movable ends 17 coupleable to valves of the same type or coupleable to other valves still than those listed above.

Conveniently, the inflation body 15 is at least partly extractable from the housing 13.

In this regard, the leg 5, 6 comprises at least one extraction slot 18 of the inflation body 15.

According to the preferred embodiment, the extraction slot 18 is positioned between the two holes 14.

In other words, it is possible to extract/replace the inflation body 15 from/to the housing 13 by pulling/pushing the inflation body itself and thus causing it to pass through the extraction slot 18.

It should be noted that the special expedient of providing a removable inflation body 15 allows the movable end 17 to be easily arranged where at least one wheel of the bicycle B is located, coupling it to the latter for the inflation thereof.

The inflation system 15 then comprises at least one air pressurization device, not shown in the figures, associated with the inflation body 15.

Preferably, the pressurization device is of the type of a pneumatic compressor, e.g. of the digital type.

In this case, the pressurization device is fitted, at least partly, within the second base element 2b.

Specifically, the pressurization device is configured to draw air from outside the base body 2 and to send it, after compressing it, to the inflation body 15.

Conveniently, the signaling means 8 comprise at least one front lighting device 19 associated with the base body 2 and configured to illuminate the bicycle B at the front.

In this regard, the second base element 2b comprises at least one front surface 20 positioned between the two side surfaces 7a, the front lighting device 19 being associated with the front surface 20.

In detail, the front lighting device 19 comprises a plurality of lights 21 of the LED type.

In the preferred embodiment, the front lighting device 19 comprises three lights 21 of the LED type.

Specifically, in the above embodiment, the lights 21 are of the white LED type. A different number of lights 21 and/or lights 21 of different type such as, e.g., a central white LED positioned between two or more red laser beam emitters cannot however be ruled out.

The fact is emphasized that the special expedient of providing a front lighting device 19 allows for the presence of the bicycle to be signaled efficiently by illuminating in front of the latter.

Not only that, but the front lighting device 19 also allows the cyclist to ride more safely, thus reducing the likelihood of a traffic accident.

Advantageously, the electronic management and control unit 10 is operatively connected to at least one remote unit 22 accessible by at least one user configured to control the activation and deactivation of the signaling means 8 depending on at least one command given by the user.

Preferably, the remote unit 22 is of the type of a cell phone.

In particular, the electronic management and control unit 10 comprises at least one link module 23 to the remote unit 22.

For example, the link module 23 interacts with the remote unit 22 via Bluetooth BTLE protocol.

This enables quick and easy link between the electronic management and control unit 10 and the remote unit 22.

Communication protocols between the remote unit 22 and the electronic management and control unit 10 of different type such as, e.g., of the LoRa type or other types still known to the expert in the field cannot however be ruled out. In addition, the electronic management and control unit 10 comprises geo-location means 24 configured to detect geo-location coordinates of the kickstand 1.

Specifically, the geo-location coordinates are of the coordinates of the GPS type.

In this regard, the electronic management and control unit 10 comprises alarm means 25 operatively linked to the geo-location means 24 and operable by the remote unit 22 to detect any movement of the bicycle B and send at least one alarm signal to the remote unit 22.

For example, the alarm means 25 send at least one alarm signal to the remote unit 22 if the bicycle B runs a distance equal to or greater than a predetermined threshold limit.

Specifically, the alarm means 25 are associated with at least one sound signaling device 26 that can be activated upon detection of any movement of the bicycle B.

In this case, the sound signaling device 26 is of the type of a siren and/or loudspeakers.

In this regard, the electronic management and control unit 10 is configured to activate the signaling means 8 if the alarm means 25 detect any movement of the bicycle B.

Thus, the alarm means 25 allow for signaling that a possible theft of the bicycle B is in progress either through the activation of the signaling means 8 or through the activation of the sound signaling device 26.

In this regard, the electronic management and control unit 10 then comprises blocking means 27 for blocking at least one leg 5, 6 operable from the remote unit 22 and adapted to counteract the passage of the leg 5, 6 from the lowered parking position to the raised riding position.

So, the user can, conveniently, activate the blocking means 27 and avert, by doing so, any attempts to steal the bicycle B.

Conveniently, the electronic management and control unit 10 is operatively connected to at least one of the power supply means 11, the inflation system 15 and the alarm means 25.

In this regard, the inflation system 15 is operable by at least one command given by the user via the remote unit 22.

In addition, the electronic management and control unit 10 is configured to send at least one characteristic parameter to the remote unit 22 via the link module 23.

For example, the at least one characteristic parameter is selected from the list comprising: the percentage of electrical charge of the storage device, the value of inflation pressure of the wheels R, at least one alarm signal coming from the alarm means 25, at least one value of geo-location coordinates detected by the geo-location means 24.

In addition, the link module 23 is configured to communicate to at least one computerized control unit 28 via LTE CAT M1 and/or GSM signal.

Specifically, the computerized control unit 28 is operatively connected to the remote unit 22 and is configured to send at least one characteristic parameter to the latter.

In this way, in fact, the computerized control unit 28 allows the user of the remote unit 22 to be informed about one or more of the characteristic parameters even when the distance between the remote unit 22 and the kickstand 1 is greater than the maximum coverage offered by the Bluetooth BTLE protocol.

It has in practice been ascertained that the described invention achieves the intended objects.

In particular, the fact is emphasized that the special expedient of providing suitable signaling means for signaling the presence of a bicycle allows for effective signaling of a cyclist's presence even in low-visibility situations such as, e.g., at night.

## Claims

1. Kickstand (1) for bicycles, comprising at least one base body (2) associated with a frame (T) of a bicycle (B), wherein it comprises:
- at least one first leg (5) and at least one second leg (6) mutually locked together in rotation around said base body (2) and positionable in at least one lowered parking position, wherein said first and second legs (5, 6) can rest on the ground to support the weight of said bicycle (B), and in at least one raised riding position, said first and second legs (5, 6) being arranged substantially parallel to at least one reference distance (D);
- signaling means (8) adapted to signal the presence of said bicycle (B) and comprising a plurality of signaling devices (9) associated with said first and second legs (5, 6), configured to emit light beams (F) and oriented so as to project said light beams (F) on the ground to define light lines (L) alongside said bicycle (B) when said first and second legs (5, 6) are in the raised riding position;
- wherein at said reference distance (D), said signaling devices (9) associated with said first leg (5) define a first light line (L) on one side of the bicycle (B) and said signaling devices (9) associated with said second leg (6) define a second light line (L) on the opposite side of the bicycle (B), said first light line (L) and said second light line (L) defining a lane on the ground within which the bicycle B is placed;
- at least one electronic management and control unit (10) associated with said base body (2), operatively connected to said signaling means (8) and configured to detect whether said first and second legs (5, 6) are in the raised riding position and to activate, as a result of said detection, said signaling means (8).

2. Kickstand (1) according to claim 1, **characterized by** the fact that one of said signaling devices (9) is oriented so as to emit said light beam (F) to define a first stretch of said light line (L) and another one of said signaling devices (9) is oriented so as to emit said light beam (F) to define a second stretch of said light line substantially aligned with said first stretch.

3. Kickstand (1) according to one or more of the preceding claims, **characterized by** the fact that said light beams (F) is of the type of a laser beam.

4. Kickstand (1) according to one or more of the preceding claims, **characterized by** the fact that each of said first and second legs (5, 6) is at least partly hollow to define inside it at least one housing (13) and is provided with at least one hole (14) obtained through and communicating with said housing (13), said signaling devices (9) being accommodated at least partly inside said housing (13) and being arranged at the point where said hole (14) is located.

5. Kickstand (1) according to one or more of the preceding claims, **characterized by** the fact that it comprises power supply means (11) of said signaling means (8) associated with said base body (2).

6. Kickstand (1) according to one or more of the preceding claims, **characterized by** the fact that said signaling means (8) comprise at least one front lighting device (19) associated with said base body (2) and configured to illuminate said bicycle (B) at the front.

7. Kickstand (1) according to claim 6, **characterized by** the fact that said front lighting device (19) comprises a plurality of lights (21) of the LED type.

8. Kickstand (1) according to one or more of the preceding claims, **characterized by** the fact that said electronic management and control unit (10) is operatively connected to at least one remote unit (22) accessible by at least one user and configured to control the activation and deactivation of said signaling means (8) depending on at least one command given by said user.

9. Kickstand (1) according to claim 4, **characterized by** the fact that it comprises at least one inflation system (15) for inflating at least one wheel (R) of said bicycle (B), said inflation system (15) being associated with said first leg (5) and comprising at least one inflation body (15) fitted at least partly inside said housing (13) and provided with at least one movable end (17) which can be coupled to said wheel (R) for the inflation of the latter.

## Patentansprüche

1. Ständer (1) für Fahrräder, mit mindestens einem Grundkörper (2), der mit einem Rahmen (T) eines Fahrrads (B) verbunden ist, wobei er umfasst:
- mindestens ein erstes Bein (5) und mindestens ein zweites Bein (6), die um den Grundkörper (2) drehfest miteinander verbunden und in mindestens eine abgesenkte Parkposition, wobei das erste und das zweite Bein (5, 6) auf dem Boden aufliegen können, um das Gewicht des Fahrrads (B) zu tragen, und in mindestens eine angehobene Fahrposition bringbar sind, wobei das erste und das zweite Bein (5, 6) im Wesentlichen parallel zu mindestens einem Referenzabstand (D) angeordnet sind;
- Signalisierungsmittel (8), die ausgebildet sind, die Anwesenheit des Fahrrads (B) zu signalisieren, und die eine Vielzahl von Signalisierungsvorrichtungen (9) umfassen, die dem ersten und dem zweiten Bein (5, 6) zugeordnet und ausgebildet sind, Lichtstrahlen (F) auszusenden, und die ausgerichtet sind, die Lichtstrahlen (F) auf den Boden zu projizieren, um Lichtlinien (L) seitlich entlang des Fahrrads (B) zu definieren, wenn sich das erste und das zweite Bein (5, 6) in der angehobenen Fahrposition befinden;
- wobei in dem Referenzabstand (D) die mit dem ersten Bein (5) verbundenen Signalisierungsvorrichtungen (9) eine erste Lichtlinie (L) auf einer Seite des Fahrrads (B) definieren und die mit dem zweiten Bein (6) verbundenen Signalisierungsvorrichtungen (9) eine zweite Lichtlinie (L) auf der gegenüberliegenden Seite des Fahrrads (B) definieren, wobei die erste Lichtlinie (L) und die zweite Lichtlinie (L) eine Fahrspur auf dem Boden definieren, in der das Fahrrad (B) angeordnet ist;
- mindestens eine elektronische Verwaltungs- und Steuereinheit (10), die mit dem Grundkörper (2) verbunden ist, die mit den Signalisierungsmitteln (8) operativ verbunden und ausgebildet ist, zu erkennen, ob das erste und das zweite Bein (5, 6) in der angehobenen Fahrposition sind, und als Ergebnis dieser Erkennung die Signalisierungsmittel (8) zu aktivieren.

2. Ständer (1) nach Anspruch 1, **dadurch gekennzeichnet, dass** eine der Signalisierungsvorrichtungen (9) so ausgerichtet ist, dass sie den Lichtstrahl (F) aussendet, um einen ersten Abschnitt der Lichtlinie (L) zu definieren, und eine andere der Signalisierungsvorrichtungen (9) so ausgerichtet ist, dass sie den Lichtstrahl (F) aussendet, um einen zweiten Abschnitt der Lichtlinie zu definieren, der im Wesentlichen an dem ersten Abschnitt ausgerichtet ist.

3. Ständer (1) nach einem oder mehreren der vorhergehenden Ansprüche, **dadurch gekennzeichnet, dass** die Lichtstrahlen (F) vom Typ eines Laserstrahls sind.

4. Ständer (1) nach einem oder mehreren der vorhergehenden Ansprüche, **dadurch gekennzeichnet, dass** jedes der ersten und zweiten Beine (5, 6) zumindest teilweise hohl ist, um in seinem Inneren mindestens ein Gehäuse (13) zu definieren, und mit mindestens einem Loch (14) versehen ist, das durch das Gehäuse (13) hindurchgeht und mit diesem in Verbindung steht, wobei die Signalisierungsvorrichtungen (9) zumindest teilweise in dem Gehäuse (13) untergebracht und an der Stelle angeordnet sind, an der sich das Loch (14) befindet.

5. Ständer (1) nach einem oder mehreren der vorhergehenden Ansprüche, **dadurch gekennzeichnet, dass** er Stromversorgungsmittel (11) für die Signalisierungsmittel (8) umfasst, die mit dem Grundkörper (2) verbunden sind.

6. Ständer (1) nach einem oder mehreren der vorhergehenden Ansprüche, **dadurch gekennzeichnet, dass** die Signalisierungsmittel (8) mindestens eine Frontbeleuchtungseinrichtung (19) umfassen, die mit dem Grundkörper (2) verbunden und ausgebildet ist, das Fahrrad (B) an der Vorderseite zu beleuchten.

7. Ständer (1) nach Anspruch 6, **dadurch gekennzeichnet, dass** die Frontbeleuchtungseinrichtung (19) mehrere Leuchten (21) vom LED-Typ umfasst.

8. Ständer (1) nach einem oder mehreren der vorhergehenden Ansprüche, **dadurch gekennzeichnet, dass** die elektronische Verwaltungs- und Steuereinheit (10) mit mindestens einer Fernbedienungseinheit (22) operativ verbunden ist, die für mindestens einen Benutzer zugänglich und ausgebildet ist, die Aktivierung und Deaktivierung der Signalisierungsmittel (8) in Abhängigkeit von mindestens einem von dem Benutzer gegebenen Befehl zu steuern.

9. Ständer (1) nach Anspruch 4, **dadurch gekennzeichnet, dass** er mindestens ein Aufblassystem (15) zum Aufblasen mindestens eines Reifens (R) des Fahrrads (B) umfasst, wobei das Aufblassystem (15) mit dem ersten Bein (5) verbunden ist und mindestens einen Aufblaskörper (15) umfasst, der zumindest teilweise in dem Gehäuse (13) angebracht ist und mindestens ein bewegliches Ende (17) aufweist, das mit dem Reifen (R) zum Aufblasen desselben gekoppelt werden kann.

## Revendications

1. - Béquille (1) pour bicyclettes, comprenant au moins un corps de base (2) associé à un cadre (T) d'une bicyclette (B), ladite béquille comprenant :
- au moins un premier pied (5) et au moins un second pied (6) mutuellement verrouillés ensemble en rotation autour dudit corps de base (2) et positionnables dans au moins une position de stationnement abaissée, lesdits premier et second pieds (5, 6) pouvant être en appui sur le sol pour supporter le poids de ladite bicyclette (B), et dans au moins une position de déplacement relevée, lesdits premier et second pieds (5, 6) étant disposés sensiblement parallèlement à au moins une distance de référence (D) ;
- des moyens de signalisation (8) aptes à signaler la présence de ladite bicyclette (B) et comprenant une pluralité de dispositifs de signalisation (9) associés auxdits premier et second pieds (5, 6), configurés pour émettre des faisceaux lumineux (F) et orientés de manière à projeter lesdits faisceaux lumineux (F) sur le sol pour définir des lignes lumineuses (L) le long de ladite bicyclette (B) lorsque lesdits premier et second pieds (5, 6) sont dans la position de déplacement relevée ;
- dans laquelle, à ladite distance de référence (D), lesdits dispositifs de signalisation (9) associés audit premier pied (5) définissent une première ligne lumineuse (L) d'un côté de la bicyclette (B) et lesdits dispositifs de signalisation (9) associés audit second pied (6) définissent une seconde ligne lumineuse (L) du côté opposé de la bicyclette (B), ladite première ligne lumineuse (L) et ladite seconde ligne lumineuse (L) définissant un chemin sur le sol à l'intérieur duquel la bicyclette (B) est placée ;
- au moins une unité électronique de gestion et de commande (10) associée audit corps de base (2), reliée fonctionnellement auxdits moyens de signalisation (8) et configurée pour détecter si ou non lesdits premier et second pieds (5, 6) sont dans la position de déplacement relevée et pour activer, par suite de ladite détection, lesdits moyens de signalisation (8).

2. - Béquille (1) selon la revendication 1, **caractérisée par le fait que** l'un desdits dispositifs de signalisation (9) est orienté de manière à émettre ledit faisceau lumineux (F) pour définir un premier tronçon de ladite ligne lumineuse (L) et qu'un autre desdits dispositifs de signalisation (9) est orienté de façon à émettre ledit faisceau lumineux (F) pour définir un second tronçon de ladite ligne lumineuse sensiblement aligné avec ledit premier tronçon.

3. - Béquille (1) selon l'une ou plusieurs des revendications précédentes, **caractérisée par le fait que** ledit faisceau lumineux (F) est du type d'un faisceau laser.

4. - Béquille (1) selon l'une ou plusieurs des revendications précédentes, **caractérisée par le fait que** chacune desdits premier et second pieds (5, 6) est au moins partiellement creux pour définir à l'intérieur de celui-ci au moins un logement (13) et comporte au moins un trou (14) obtenu à travers et communiquant avec ledit logement (13), lesdits dispositifs de signalisation (9) étant reçus au moins partiellement à l'intérieur dudit logement (13) et étant disposés à l'endroit où se trouve ledit trou (14).

5. - Béquille (1) selon l'une ou plusieurs des revendications précédentes, **caractérisée par le fait qu'**elle comporte des moyens d'alimentation électrique (11) desdits moyens de signalisation (8) associés audit corps de base (2) .

6. - Béquille (1) selon l'une ou plusieurs des revendications précédentes, **caractérisée par le fait que** lesdits moyens de signalisation (8) comprennent au moins un dispositif d'éclairage avant (19) associé audit corps de base (2) et configuré pour éclairer ladite bicyclette (B) à l'avant.

7. - Béquille (1) selon la revendication 6, **caractérisée par le fait que** ledit dispositif d'éclairage avant (19) comprend une pluralité de feux (21) de type DEL.

8. - Béquille (1) selon l'une ou plusieurs des revendications précédentes, **caractérisée par le fait que** ladite unité électronique de gestion et de commande (10) est reliée fonctionnellement à ladite au moins une unité distante (22) accessible par au moins un utilisateur et configurée pour commander l'activation et la désactivation desdits moyens de signalisation (8) en fonction d'au moins une commande donnée par ledit utilisateur.

9. - Béquille (1) selon la revendication 4, **caractérisée par le fait qu'**elle comprend au moins un système de gonflage (15) pour gonfler au moins une roue (R) de ladite bicyclette (B), ledit système de gonflage (15) étant associé audit premier pied (5) et comprenant au moins un corps de gonflage (15) monté au moins en partie à l'intérieur dudit logement (13) et comportant au moins une extrémité mobile (17) qui peut être couplée à ladite roue (R) pour le gonflage de cette dernière.
